# EUROPEAN PATENT APPLICATION

(11) **EP 4 478 172 A1**
(43) Date of publication of application: **18.12.2024**
(21) Application number: 23763770.7
(22) Date of filing: 06.03.2023
(51) Int. Cl.: G06F 3/12, G06F 9/451

(54) **PRINTING APPARATUS FOR PERFORMING PRINTING ACCORDING TYPE OF PRINTING PAPER DETERMINED BY RECOGNIZING BAR PATTERN**

(30) Priority: 04.03.2022 KR 20220028090
(71) Applicant: Bixolon Co., Ltd., Seongnam-si, Gyeonggi-do 13493 (KR)
(72) Inventor: HWANG, Junho, Seongnam-si Gyeonggi-do 13493 (KR); SEONG, Pilyong, Seongnam-si Gyeonggi-do 13493 (KR); JI, Min Sik, Seongnam-si Gyeonggi-do 13493 (KR)
(74) Representative: Isarpatent
(86) International application number: PCT/KR2023/003051
(87) International publication number: WO 2023/167573

(57) **Abstract**

There is proposed a printing apparatus for performing printing on printing paper in which a plurality of labels constituting a printing area are sequentially arranged and mounted to be retractable in a wound state and a bar pattern corresponding to paper information is formed on at least one of the plurality of labels. The printing apparatus includes: an input/output interface configured to receive user input and transmit and receive data to and from an external device; a printer configured to perform printing on the printing paper; a sensor configured to recognize black marks and bar patterns formed on the printing paper; storage configured to store paper information corresponding to a bar pattern recognized by the sensor and store a program for performing a printing operation based on the paper information; and a controller including at least one processor.

## Description

### Technical Field

The embodiments disclosed herein relate to a printing apparatus that performs printing according to information about printing paper collected through the recognition of a bar pattern formed on the printing paper.

### Background Art

There are various types of printing paper, used in printing apparatuses, depending on their purpose. For example, when general documents are printed, white paper of various sizes (e.g., A4) can be used. When labels used to attach price tags or invoices to products are printed, label paper whose rear surface is coated with an adhesive and which is divided into a predetermined size can be used.

The type of printing paper that can be used varies depending on the type of printing apparatus (e.g., a general printer, a label printer, or the like) . Even for the same printing apparatus, the printing operation may vary depending on the type of printing paper used. Accordingly, the printing apparatus needs to determine the type of printing paper currently loaded.

As methods of determining the type of printing paper loaded into a printing apparatus, there are a method in which a user personally enters the type of printing paper in the settings of a printing apparatus and a method in which a printing apparatus determines the size of printing paper and/or the like by using a sensor. These methods have a problem in that they are cumbersome for users or the types of printing paper that can be determined are limited.

Meanwhile, the above-described background technology corresponds to technical information that has been possessed by the present inventor in order to contrive the present invention or that has been acquired in the process of contriving the present invention, and can not necessarily be regarded as well-known technology that had been known to the public prior to the filing of the present invention.

### Disclosure

### Technical Problem

An object of the embodiments disclosed herein is to propose a printing apparatus that performs printing according to information about the printing paper collected through the recognition of a bar pattern formed on the printing paper.

### Technical Solution

As a technical solution for overcoming the above-described technical problems, there is provided a printing apparatus that performs printing according to the type of printing paper determined through bar pattern recognition according to an embodiment, which is a printing apparatus for performing printing on printing paper in which a plurality of labels constituting a printing area are sequentially arranged and mounted to be retractable in a wound state and a bar pattern corresponding to paper information is formed on at least one of the plurality of labels, the printing apparatus including: an input/output interface configured to receive user input and transmit and receive data to and from an external device; a printer configured to perform printing on the printing paper; a sensor configured to recognize black marks and bar patterns formed on the printing paper; storage configured to store paper information corresponding to a bar pattern recognized by the sensor and store a program for performing a printing operation based on the paper information; and a controller including at least one processor; wherein the controller, by executing the program, collects the paper information by recognizing the bar pattern while feeding the printing paper, detects an error based on the collected paper information, and does not perform a printing operation when an error is detected and performs a printing operation when an error is not detected.

Furthermore, the sensor may include a black mark sensor and a bar pattern sensor that are arranged alongside each other based on the widthwise direction perpendicular to the direction in which the printing paper is transferred and that include respective optical sensors that recognize the black marks and the bar patterns, respectively.

Furthermore, the black mark sensor and the bar pattern sensor may be arranged in bilateral symmetry so that the light emission parts of the black mark sensor and the bar pattern sensor are adjacent to each other and the light reception parts thereof are arranged far away from each other.

Furthermore, the sensor may be disposed in front of the printer so that the printing paper reaches the printer after having been transferred to the sensor based on the direction in which the printing paper is transferred, and may be configured to come into contact with the rear surface of the printing paper.

Furthermore, the controller may detect whether a printing paper change event has occurred, may recognize the bar patterns while feeding the printing paper when the printing paper change event has occurred, may collect paper information by converting the recognized bar pattern into a character string, and may determine that the printing paper change event has occurred when the printing apparatus is turned on or the cover of the printing apparatus is opened or closed.

Furthermore, the controller may detect the error when the paper information is not a valid value, when the type of printing paper included in the paper information does not correspond to the type of printing paper preset in the printing apparatus, when the usable period of the printing paper has expired based on manufacturing date or expiration date information included in the paper information, or when the type of printing paper included in the paper information and the width of the printing paper detected do not correspond to each other.

Furthermore, when the error is detected, the input/output interface may output the occurrence of the error as a visual or auditory alarm or report it to a host apparatus connected to the printing apparatus.

Furthermore, the controller may sequentially collect successive paper information corresponding to a plurality of bar patterns sequentially arranged among the bar patterns formed on the printing paper, and may detect the error based on the successive paper information.

Furthermore, the controller may feed the printing paper, may recognize the bar pattern without performing a printing operation, and, when an error is not detected in the paper information corresponding to the recognized bar pattern, may back-feed the already fed printing paper and then initiate a printing operation.

Furthermore, the controller may feed the printing paper, may recognize the bar pattern while performing a printing operation, and, when an error is detected in the paper information corresponding to the recognized bar pattern, may stop the printing operation.

Furthermore, the sensor may further include a paper width detection sensor configured to detect the width of the printing paper; and the controller may detect the error when the type of printing paper included in the paper information and the width of the printing paper detected by the paper width detection sensor do not correspond to each other.

Furthermore, the controller may detect the remaining amount of printing paper based on at least one of the length of the black mark detected by the black mark sensor and the paper information corresponding to the bar pattern, and may perform a preset event when the detected remaining amount is equal to or smaller than a preset remaining amount.

Moreover, the controller: when the length of the label determined based on the paper information is equal to or shorter than a previously stored distance between a print head included in the printer and the sensor, may determine whether to perform a printing operation based on paper information obtained by recognizing a bar pattern corresponding to a label to be printed; and, when the length of the label determined based on the paper information exceeds the previously stored distance between the print head included in the printer and the sensor, may determine whether to perform a printing operation based on paper information obtained by recognizing a bar pattern corresponding to a label immediately preceding a label to be printed.

### Advantageous Effects

According to one of the above-described technical solutions, the type of printing paper is determined based on the result obtained in such a manner that the controller recognizes the bar pattern formed on the printing paper through the sensor, so that the effect of improving convenience can be expected.

More specifically, a bar pattern having information related to printing paper is printed on the printing paper and the controller is caused to recognize the bar pattern through the sensor, so that information about the printing paper can be automatically recognized even when a user does not enter it personally.

Furthermore, the sensor for bar pattern and black mark recognition is implemented as optical sensors such as infrared ray (IR) sensors, so that effects can be expected in that the cost is reduced compared to a case using image sensors such as contact image sensors (CISs) and also processing speed is improved by enabling bar pattern recognition while performing a printing operation.

Furthermore, the light emission part and light reception part of the black mark sensor for recognizing black marks and the light emission part and light reception part of the bar pattern sensor for recognizing bar patterns are arranged in reverse orders, so that the effect of preventing recognition errors attributable to optical interference between the two sensors can be expected.

Furthermore, the controller records the bar patterns that are recognized sequentially, and, when an error is detected, as in the case where the bar patterns deviate from preset rules or do not correspond to previously stored information, stops a printing operation or reports the detection of the error to a server, so that an incorrect printing operation can be prevented from being performed.

Furthermore, string data indicating the specifications or material of printing paper, the type of printing paper according to the manufacturer, the manufacturing date or expiration date of the printing paper, etc. may be obtained from the results of converting the recognized bar patterns into character format. Through this, information about the printing paper can be easily collected.

Furthermore, the width of printing paper is recognized and also it is checked whether printing paper in question corresponds to the printing paper recognized by the bar pattern, so that printing paper having correct specifications can be employed.

Moreover, the remaining amount of printing paper may be recognized through a change in the length of the black mark, information written in the bar pattern, or the recognition of the separate remaining amount mark, so that the effect of becoming aware of the time when the printing paper needs to be replaced in advance can be expected.

The effects that can be obtained by the embodiments disclosed herein are not limited to the above-described effects, and other effects that have not been described above will be clearly understood by those having ordinary skill in the art, to which the present invention pertains, from the following description.

### Description of Drawings

FIG. 1 is a diagram showing a printing system according to an embodiment;
FIG. 2 is a diagram showing the configuration of a printing apparatus included in a printing system according to an embodiment;
FIG. 3 is a diagram showing printing paper according to an embodiment;
FIG. 4 is a diagram showing an embodiment in which the shape of a start bar indicating the starting point of a bar pattern has been changed;
FIG. 5 is a diagram showing the structures of a black mark sensor and a bar pattern sensor installed in a printing apparatus according to an embodiment;
FIG. 6 is a diagram showing the configurations of a sensor and a printer installed in a printing apparatus according to an embodiment; and
FIGS. 7 to 9 are flowcharts illustrating a method of performing printing according to the type of printing paper determined through bar pattern recognition according to an embodiment.

### Mode for Invention

Various embodiments will be described in detail below with reference to the accompanying drawings. The following embodiments may be modified to various different forms and then practiced. In order to more clearly illustrate features of the embodiments, detailed descriptions of items that are well known to those having ordinary skill in the art to which the following embodiments pertain will be omitted. Furthermore, in the drawings, portions unrelated to descriptions of the embodiments will be omitted. Throughout the specification, like reference symbols will be assigned to like portions.

Throughout the specification, when one component is described as being "connected" to another component, this includes not only a case where the one component is 'directly connected' to the other component but also a case where the one component is 'connected to the other component with a third component arranged therebetween.' Furthermore, when one portion is described as "including" one component, this does not mean that the portion does not exclude another component but means that the portion may further include another component, unless explicitly described to the contrary.

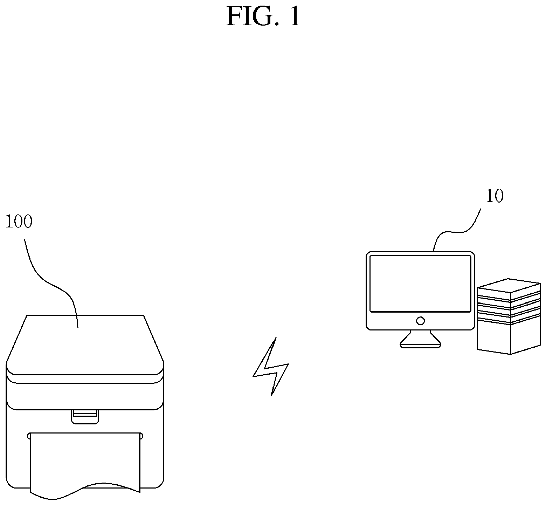

FIG. 1 is a diagram showing a printing system according to an embodiment. Referring to FIG. 1, a printing system according to an embodiment may include a printing apparatus 100 and a host apparatus 10. The printing apparatus 100 and the host apparatus 10 are connected to each other and may transmit and receive data. The printing apparatus 100 may receive print data from the host apparatus 10 or perform a printing operation under the control of the host apparatus 10.

In this case, the printing apparatus 100 may be, for example, a label printer for printing stamps, courier labels, or general distribution labels.

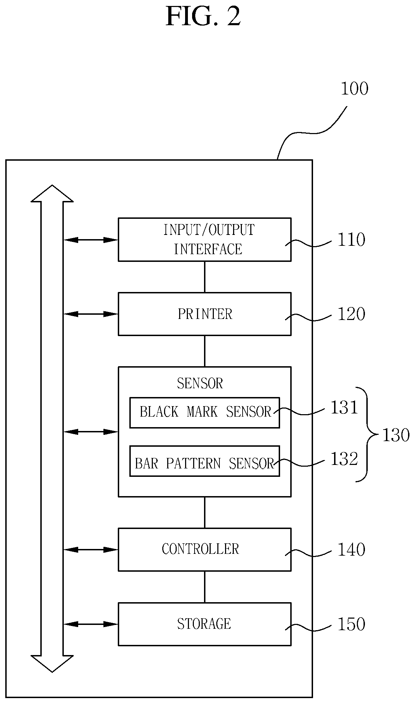

FIG. 2 is a diagram showing the configuration of a printing apparatus included in a printing system according to an embodiment. Referring to FIG. 2, a printing apparatus 100 according to an embodiment may include an input/output interface 110, a printer 120, a sensor 130, a controller 140, and storage 150.

The input/output interface 110 is a component that is connected to an external device, and transmits and receives data, receives input related to a printing operation or settings from a user, and displays the progress status of a printing operation. For example, the input/output interface 110 may include a communication chipset, an input/output port, etc. for wired and/or wireless communication with the host apparatus 10. Furthermore, for example, the input/output interface 110 may include a display panel, a touch screen, and hard buttons for receiving input and displaying information through a UI screen.

The printer 120 is a component for performing printing on printing paper, and may include a print head such as a thermal print head (TPH), a feeding roller for transferring printing paper, and a step motor.

The sensor 130 is a component for recognizing black marks and bar patterns formed on printing paper, and may include a black mark sensor 131 and a bar pattern sensor 132. According to an embodiment, the black mark sensor 131 and the bar pattern sensor 132 may both be implemented as optical sensors such as infrared ray (IR) sensors. By implementing the black mark sensor 131 and the bar pattern sensor 132 as optical sensors, the following two advantages may be obtained.

First, optical sensors are cheaper than image sensors such as contact image sensors (CISs), so that the production cost of the printing apparatus 100 can be reduced. Second, in order to recognize a bar pattern using an image sensor, a printing operation needs to be stopped while sensing is performed. In contrast, when a bar pattern is recognized using an optical sensor, recognition may be performed at the same time as a printing operation, so that processing speed can be expected to be improved.

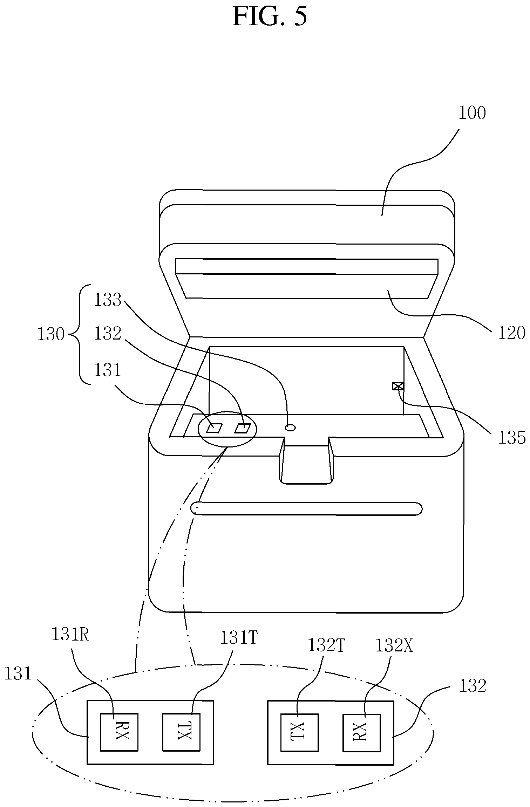

According to an embodiment, by arranging the light emission part 131T and light reception part 131R of the black mark sensor 131 and the light emission part 132T and light reception part 131R of the bar pattern sensor 132 in reverse orders, the effect of preventing recognition errors attributable to optical interference between the two sensors may be expected. This will be described with reference to FIG. 5 below.

The controller 140 is a component that includes at least one processor, such as a CPU, and controls the overall operation of the printing apparatus 100. In particular, the controller 140 may control the printing apparatus 100 so that the type of printing paper can be determined through the recognition of a bar pattern formed on printing paper and a printing operation can be performed accordingly by executing a program stored in the storage 150.

The storage 150 includes volatile memory and nonvolatile memory, and various types of programs and data may be stored in the storage 150. In particular, a program for determining the type of printing paper through the recognition of a bar pattern and performing a printing operation accordingly may be stored in the storage 150.

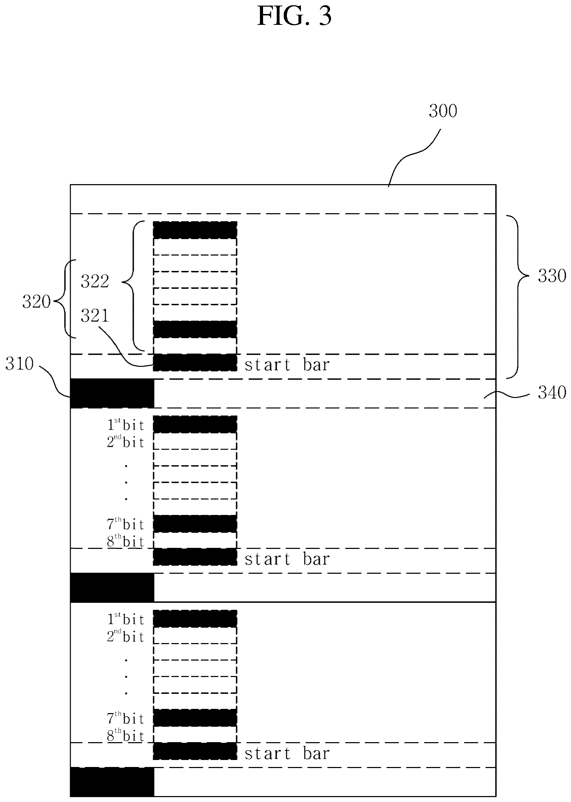

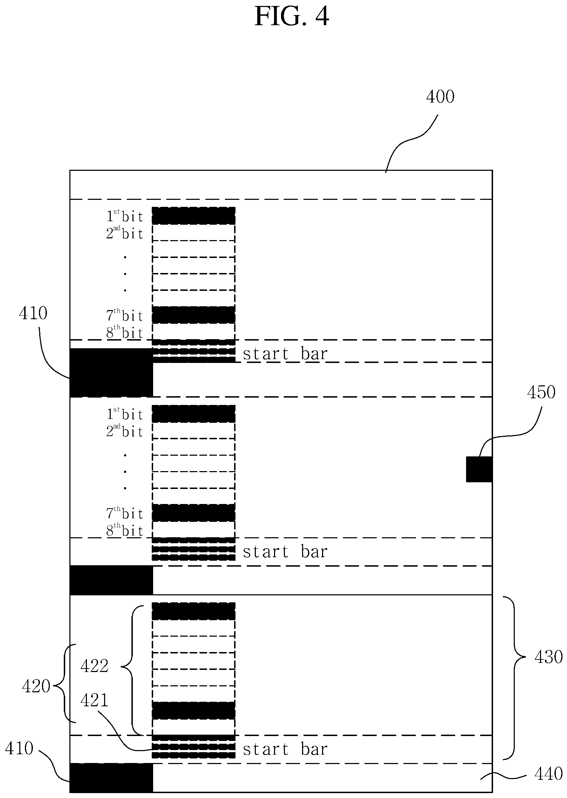

Referring to FIGS. 3 and 4, a process in which the printing apparatus 100 according to an embodiment acquires information about printing paper by recognizing a bar pattern formed on the printing paper and performs a printing operation according to the determined type of printing paper will be described below. However, prior to the description of the printing operation of the printing apparatus 100, printing paper will be described in detail.

FIGS. 3 and 4 are diagrams showing printing paper according to an embodiment. Referring to FIGS. 3 and 4, printing paper 300 and 400 according to an embodiment may be label paper used to print labels. More specifically, the printing paper 300 is a roll-type printing medium into which label paper in which a plurality of labels are arranged in a row and form a strip shape is wound. FIGS. 3 and 4 show only portions of them in the longitudinal direction.

FIG. 3 shows the rear side of printing paper, i.e., the rear side of printing paper on which data is not printed. As shown in FIG. 3, the printing paper 300 includes a plurality of labels 330 each forming an independent printing area, and gaps 340 each having a predetermined length may be formed between the labels 330. In this case, a black mark 310, which will be described later, may be formed in each of the gaps 340 between the labels 330. The black mark 310 may be formed by printing a pattern having a predetermined length in the printing direction with colored dye such as black on the printing paper 300 so that it can be recognized by an optical sensor or the like. For example, the black mark 310 may have a predetermined rectangular pattern, as shown in the drawing. Furthermore, the black mark 310 may be printed at a predetermined position with respect to the widthwise direction of the printing paper. For example, as shown in the drawing, the black mark 310 may be printed on the left side in the widthwise direction of the printing paper. In this case, the printing apparatus 100 using the printing paper may be equipped with the above-described black mark sensor 131 at a position corresponding to the position where the black mark 310 is printed.

In this case, depending on the embodiment, the printing paper 300 may be configured such that one unit label 330 forms a relatively small-sized print, such as a postage stamp or a small courier label, or may be configured such that two or more unit labels 330 arranged successively form a relatively large courier label or distribution label.

For example, the printing paper 300 may provide paper having a length of 1.2 inches as one unit label 330, and may provide paper of a type having a length of 6 inches containing five unit labels 330.

Meanwhile, depending on the embodiment, more specifically, the printing paper 300 may be composed of front paper and rear paper, and an adhesive may be applied to the rear surface of the front paper. Furthermore, in this case, depending on the embodiment, the adhesive may not be applied to areas corresponding to the above-described gaps 340. In this case, the gaps 340 are formed at predetermined intervals while forming areas on the rear surface to which the adhesive is not applied, and thus divide the plurality of labels 330 forming printing areas. The gaps 340 form areas to which the adhesive is not applied, so that the gaps 340 can be easily cut by the printing apparatus 100 or a user. However, this is not necessarily the case, and it is obvious that the adhesive may be applied to the overall rear surface of the front paper. Furthermore, depending on the embodiment, the front paper of the printing paper 300 may be in the state in which the above-described labels 330 are each independently attached to the rear paper, i.e., the state in which the portions of the front paper corresponding to the gaps 340 are cut and separated.

Meanwhile, depending on the embodiment, the plurality of labels 330 may be sequentially arranged on the rear paper in the state of being physically separated from each other or in the state of being connected to each other.

Meanwhile, a data area 320 may be formed in one area of each label 330. The data area 320 is formed on the rear paper corresponding to the printing area of each label 330, and may include a start bar 321 and a bit area 322. The start bar 321 serves to provide notification that the data area 320 starts. The printing paper 300 shown in FIG. 3 is fed in the downward direction in the drawing. Accordingly, the bar pattern sensor 132 recognizes the start bar 321 first for each data area 320.

Meanwhile, the bit area 322 is divided into a plurality of sub-areas having the same size and shape that are arranged sequentially, as shown in the drawing. Each of the sub-areas is filled with a color as in the black mark 310 or is left blank with an off-white color such as white, so that various types of data can be printed in advance within the bit area 322. For example, as shown in the drawing, the bit area 322 includes a total of eight sub-areas, so that 8-bit data can be written therein. It is obvious that the number of bits may be set differently depending on the embodiment. Meanwhile, hereinafter, a plurality of 'sub-areas' included in the bit area 322 are referred to as 'bits' for the sake of convenience.

As described above, the same information may be recorded in the bit areas 322 of the printing paper 300 for all unit labels 330 in one piece of printing paper 300, i.e., one printing roll, depending on the embodiment. However, in another embodiment, different types of information may be recorded in the bit areas 322 of respective labels 330. Furthermore, in still another embodiment, the same information may be repeatedly written for each predetermined number of labels 330. For example, a bar pattern corresponding to an uppercase letter 'A' may be recorded in each of the bit areas 322 corresponding to all the labels 330, a bar pattern corresponding to 'A, B, C' may be printed for every three labels, or bar patterns corresponding to different types of information may be printed on respective labels. For example, bar patterns corresponding to uppercase alphabetical letters may sequentially be printed as 'A, B, C, D, E, ...' in respective data areas 330 on a specific type of printing paper, and bar patterns corresponding to lowercase alphabetical letters may sequentially be printed as 'a, b, c, d, e, ...' on another type of printing paper.

Furthermore, bar patterns corresponding to character strings indicating the year of issue, expiration date, manufacturer, type, etc. of the printing paper 300 are printed on labels ranging from the first label of the printing paper 300 through a preset number of labels, and a bar pattern corresponding to a character string indicating a near-end may be printed on a plurality of labels adjacent to a last label included in the printing paper 300.

In this manner, a bar pattern corresponding to a character string indicating information about printing paper may be printed on a data area 320 corresponding to each label 330.

Meanwhile, FIG. 4 is a diagram showing an embodiment in which the shape of a start bar indicating the starting point of a bar pattern has been changed. The printing paper 400 shown in FIG. 4 is label paper, as in FIG. 3. As described in FIG. 3, black marks 410 are formed between labels 430, and gaps 440, which are areas where the black marks 410 are formed, are present.

However, in the case of the printing paper 400 shown in FIG. 4, the shape of a start bar 421 included in each data area 420 is different from that of the embodiment shown in FIG. 3. Referring to FIG. 4, the start bar 421 is formed in the shape in which three bars, each of which is thinner than each of the bits included in each bit area 422, are arranged at regular intervals. By forming the start bar 421 in this form, the start bar 421 may be clearly distinguished from the bit area 422, so that the controller 140 can be prevented from incorrectly recognizing the start point of the data area 420.

Furthermore, depending on the embodiment, the start bars 321 or 421 may be omitted. Accordingly, the bit areas 322 or 422 may start from the end points of the black marks 310 or 410. In this case, the printing apparatus 100 may recognize that each of the bit areas 322 starts from the point when the black mark is no longer detected by the black mark sensor 131. When the start bars are omitted in this manner as another embodiment, the controller 140 of the printing apparatus 100 may identify the starting point of the next data area 320 by counting the number of steps of the step motor from the point when the recognition of each bar pattern ends. To this end, the controller 140 needs to know in advance the length of the labels 330 and the length of the gaps 340, and this information may be stored in advance in the storage 150. For example, information about the lengths of labels and gaps for each type of printing paper may be stored in the storage 150, and the controller 140 may access the storage 150 and check for information corresponding to the type of printing paper determined through bar pattern recognition.

Meanwhile, as shown in FIGS. 3 and 4, the bar patterns printed on the data areas 320 or 420 may be placed in a position different from that of the black marks based on the widthwise direction of the printing paper 300. As illustrated in the drawing, it can be seen that the data areas 320 or 420 in which the bar patterns are formed are arranged relatively to the right of the black marks. In this case, the data areas 320 or 420 are set to be formed at a position corresponding to the position at which the bar pattern sensor 132 described above is provided.

Meanwhile, when printing is performed using the printing paper 300 or 400 as described above, the operation of the printing apparatus 100 will be described. The printing apparatus 100 performs printing while feeding the printing paper 300 or 400 in the forward direction. In the state in which the data to be printed has been loaded into the storage 150, the controller 140 applies signals based on images corresponding to the loaded data to the TPH to generate heat while transferring the leading edge of the wound printing paper 300 or 400 by rotating a feeding roller, thereby performing printing. In this case, the controller 140 may recognize black marks and bar patterns from the rear surface of the printing paper 300 or 400 transferred for printing by driving the above-described sensor 130.

Furthermore, in another embodiment, the controller 140 may recognize black marks and bar patterns by feeding only the printing paper 300 or 400 in the forward direction without performing printing.

Thereafter, the controller 140 may at least temporarily record information corresponding to the recognized black marks and bar patterns in the storage 150.

More specifically, the controller 140 may recognize a black mark by driving the black mark sensor 131. When a black mark indicating the gap 340 between the labels 330 is recognized, the controller 140 may prepare for printing by preparing data to be printed on the next label 330. Furthermore, when a black mark is recognized, the controller 140 may prepare for the recognition of a bar pattern disposed after the end point of the black mark based on the printing direction by using the bar pattern sensor 132.

Depending on the embodiment, the controller 140 may recognize the start bar 321 or 421 of the data area 320 or 420 of the bar pattern from the end point of the black mark. Through this, the controller 140 may determine the point from which the bit area 322 starts.

Thereafter, the printing apparatus 100 may recognize each bit of the bit area 322 using the bar pattern sensor 321. Each bit of the bit area 322 may be filled or left black, and the controller 140 may recognize a filled bit as '1' and a blank bit as '0', for example. Furthermore, the controller 140 may convert binary code data, represented by 1s and 0s, into characters using a preset method. For example, when the bit area is composed of a total of 8 bits as shown in the drawings, it may have a total of 256 different values when converted into binary code. Therefore, when different characters are assigned to each binary code, a maximum of 256 characters may be represented.

Accordingly, the controller 140 may first convert the data recognized by the bar pattern sensor 321 into binary code and then convert it into characters assigned to the binary code. Furthermore, the controller 140 may collect a character string from the printing paper 300 or 400 by sequentially storing characters corresponding to the bar patterns sequentially printed on the printing paper 300 or 400.

The controller 140 may determine information corresponding to the character string recognized on the printing paper 300 or 400 based on preset rules or prestored information. For example, in the case where a bar pattern corresponding to three characters 'A, B, C' is set to be periodically recorded in each data area of a first type of printing paper 300 or 400 and 'X, Y, Z' is preset to be periodically recorded on a second type of printing paper 300 or 400, when the character string sequentially recognized from the bar patterns recorded on the printing paper 300 or 400 is 'XYZ,' the controller 140 may determine that the printing paper 300 or 400 is of a second type.

Furthermore, the controller 140 may recognizes the type of printing paper (including the type according to a manufacturer, specifications, material, and/or the like) from the character string corresponding to the bar patterns of the printing paper 300 or 400, or may recognize the manufacturing date of the printing paper, the expiration date of the printing paper, the remaining amount of printing paper, and/or the like from the character string. Furthermore, the controller 140 may read authentication information from the bar patterns printed on the printing paper 300 or 400 and check whether the printing paper 300 or 400 is genuine in response to the read information.

In this case, the authentication information may be set differently, for example, depending on the type of printing paper, and may be printed on a label at a predetermined position among a plurality of labels on the printing paper. Accordingly, when authentication information corresponding to the type of printing paper identified based on a bar pattern is not found, the controller 140 may determine that a printing paper in question is not genuine.

Furthermore, the authentication information may include a value calculated by, for example, inputting one or more authentication keys, recorded on at least some of the plurality of labels on printing paper, into a predetermined function. The controller 140 may determine whether printing paper is genuine by calculating authentication information by using the authentication key recognized from the printing paper and then detecting whether the calculated authentication information has been recorded on the printing paper. In this embodiment, the authentication key may be printed in the data area of a label placed ahead of the authentication information, and the authentication information may be printed in the data area of a label placed behind the authentication key.

Meanwhile, the controller 140 may control a printing operation based on the character string read and obtained from the bar pattern printed on the printing paper 300 or 400.

The controller 140 may adjust the specifications of printed data according to the recognized type of printing paper. Furthermore, when the type of printing paper is not appropriate or is not of a previously permitted type, the controller 140 may recognize that an error has occurred, and may not start a printing operation or may stop a printing operation that has already been performed.

Furthermore, when a preset period of time has elapsed from the manufacturing date of the printing paper to the present, or the expiration date of the printing paper has passed, the controller 140 recognizes that an error has occurred, and may not start a printing operation or may stop a printing operation that has already been performed.

Furthermore, when it is determined that the printing paper is not genuine as a result of the authentication of the printing paper, the controller 140 recognizes that an error has occurred, and may not start a printing operation or may stop a printing operation that has already been performed.

Furthermore, when it is recognized that the remaining amount of printing paper, e.g., the remaining distance or the remaining number of labels, is less than a set amount as a result of printing paper authentication, the controller 140 may issue an alarm providing notification that the remaining amount of printing paper is insufficient.

Furthermore, when the determined type of printing paper does not correspond to the width of the printing paper detected by a paper width detection sensor 135, which will be described later, the controller 140 recognizes that an error has occurred, and may not start a printing operation or may stop a printing operation that has already been performed.

Furthermore, in the above-described embodiments, when it is recognized that an error has occurred, the controller 140 may report the occurrence of the error to the host apparatus 10 described above.

Meanwhile, in an embodiment, when the power of the printing apparatus 100 is newly turned on or the cover of the printing apparatus 100 is opened or closed, the controller 140 may determine that a change event for printing paper has occurred and may recognize the bar pattern that is recorded on the printing paper. Furthermore, the controller 140 may determine the type of printing paper based on the character string corresponding to the recognized bar pattern, and may perform a printing operation corresponding to the determined printing paper. However, when the type of printing paper is not recognized or it is determined that printing paper in question is not a previously permitted printing paper, it is recognized that an error has occurred and a printing operation may be stopped.

In this case, the controller 140 may perform bar pattern recognition first without performing printing while feeding printing paper for a preset distance. Then, when the printing paper is determined to be normal, the controller 140 may back-feed the already fed printing paper and then start printing.

Furthermore, the controller 140 may recognize the bar pattern while feeding the printing paper in the forward direction, and may then continue printing when the printing paper is determined to be normal and stop printing when the printing paper is not determined to be normal.

Furthermore, the controller 140 may perform the recognition of a bar pattern printed on the printing paper only until the type of printing paper is determined and then stop, or may continue to recognize a bar pattern whenever printing is performed even after the type of printing paper has been determined.

According to an embodiment, when an error is recognized as a result of the recognition of the data area 320, the controller 140 of the printing apparatus 100 may indicate that the printing paper 300 cannot be used by printing the word "Invalid" on the label 330.

Furthermore, according to an embodiment, the controller 140 of the printing apparatus 100 may take corresponding measures according to the number of consecutive data areas 320 in which errors are recognized. For example, the controller 140 may recognize the bar pattern up to the data area 320 immediately next to the data area 320 where an error was first detected, and may then continue a printing operation when it is determined that there is no error in the corresponding bar pattern. However, when errors are successively detected in a preset or larger number or data areas 320, the controller 140 may stop the operation of the printing apparatus 10 and notify the host apparatus 10 that an error has occurred. The reason for this is that a recognition error may occur due to the attachment of foreign material to the data area 320 or the like.

Meanwhile, for each bit included in the data area 320, when the number of recognized dots out of the total number of dots constituting the bit exceeds a predetermined reference dot number, the controller 140 may recognize the value of the bit as '1.' For example, each bit may include 24 dots. When the number of dots detected through the bar pattern sensor 132 is 20 dots or more, the controller 140 may determine the value of the corresponding bit to be '1'. In this manner, when only 4 dots or fewer are recognized for a specific bit, the controller 140 may recognize the value of the bit as '0.' However, a bit having a value therebetween may be determined to be an error.

Meanwhile, although the value representing the remaining amount of printing paper is described as written in the bar pattern in the above-described embodiment, the remaining amount of printing paper may be represented using a black mark or another third marker.

The controller 140 continuously recognizes black marks. Depending on the embodiment, black marks adjacent to labels close to the end point of the printing paper may be printed to be relatively long or short in length, allowing the controller 140 to recognize the near-end of the printing paper. Alternatively, a separate remaining amount indication marker may be printed and recognized at a position that can be recognized by a third sensor other than the black mark sensor 131 and the bar pattern sensor 132.

In the case of the black marks 410 shown in FIG. 4, they may each be formed in the shape of a block having a predetermined area. The length of the block disposed on the distal end of the printing paper 400 may be formed to be relatively longer than the length of the block disposed on the other side. Accordingly, when the controller 140 recognizes a mark having a different length from that of the other black marks 410 while recognizing the black marks 410 through the black mark sensor 131, it may provide a near-end alarm to a user as a visual signal such as LED flickering or display or an auditory signal such as a beep sound, and may transmit information to the host apparatus 10.

Meanwhile, the printing paper 400 may have remaining amount marks 450 formed separately from the bar patterns 420 or the black marks 410. The remaining amount marks 450 may be formed at predetermined intervals on the printing paper 400 and may be recognized by a separate sensor. When the remaining amount mark 450 is recognized, the controller 140 of the printing apparatus 100 may check for the remaining distance of the printing paper 400 and provide an alarm signal and information to the user and the host apparatus 10.

FIG. 5 is a diagram showing the structures of the black mark sensor 131 and the bar pattern sensor 132 installed in the printing apparatus 100 according to an embodiment. Referring to FIG. 5, the black mark sensor 131 and the bar pattern sensor 132 may be successively arranged to be adjacent to each other based on the widthwise direction of the printing paper, i.e., the direction perpendicular to the direction in which the printing paper is transferred. Each of the sensors 131 and 132 may include a light emission part 131T or 132T and a light reception part 131R or 132R.

As shown in FIG. 5, the light emission parts 131T and 132T and light reception parts 131R and 132R of the black mark sensor 131 and the bar pattern sensor 132 may be arranged in reverse orders. That is, the two sensors may be arranged in bilateral symmetry. When the sensors 131 and 132 are arranged in this manner, the light emitted from the light emission part 131T or 132T of each sensor is directed in the direction opposite to the direction of the neighboring sensor, so that the possibility of influencing the light reception part 131R or 132R of neighboring sensor is reduced. Accordingly, it may be possible to prevent recognition errors from occurring in the two sensors 131 and 132 due to optical interference.

Meanwhile, the printing apparatus 100 may be equipped with a paper width detection sensor 135. The paper width detection sensor 135 is a component that allows different printing algorithms to be used depending on the width of the printing paper. A configuration that is installed in a paper holder (not shown) on which printing paper is mounted to be unwound and detects the width of the printing paper by detecting the position of at least one end of the printing paper in the widthwise direction while radiating light may be applied as the paper width detection sensor 135. Alternatively, a configuration that is installed in a paper guide (not shown) which is installed on the output side of the printing apparatus and guides printing paper through the output thereof while opening or closing depending on the width of the paper and detects the width of the printing paper may be applied as the paper width detection sensor 135.

Accordingly, the controller 140 of the printing apparatus 100 may check whether the width of the printing paper recognized by the paper width detection sensor 135 corresponds to the type of printing paper corresponding to the bar pattern detected by the sensor 130, and may perform a printing operation depending on whether there is a correspondence therebetween. That is, when the width of the printing paper recognized by the paper width detection sensor 135 does not correspond to the bar pattern detected by the sensor 130, the controller 140 may determine that printing paper that does not meet the specifications has been used and stop a printing operation, and may print a mark indicating that the printing paper cannot be used.

Furthermore, the printing apparatus 100 may be equipped with a gap sensor 133 for recognizing the gap 340 or 440 described above, and the gap sensor 133 may be implemented as an optical sensor such as an IR (Infrared Ray) sensor.

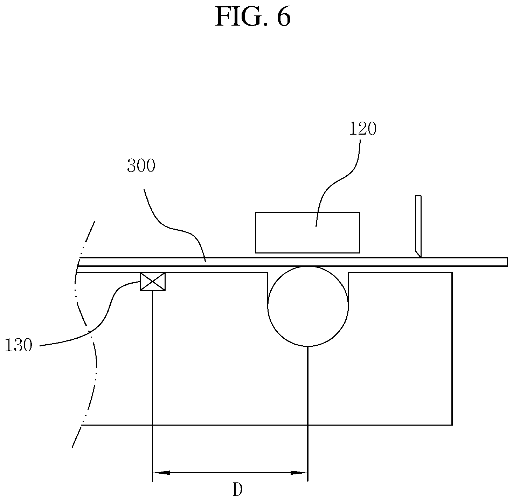

FIG. 6 is a diagram showing the configurations of a sensor and a printer installed in a printing apparatus according to an embodiment. When performing a printing operation on the printing paper 300, the printing apparatus shown in FIG. 6 may compare the distance D between the sensor 130 and the printer (the TPH, and the roller) 120 with the length of one printing area forming part of the printing paper 300, i.e., the label 330, and, when the distance D between the sensor 130 and the printer 120 is longer than the length of the label 330 of the printing paper 300, perform printing after recognizing the bar pattern from the label 330. Accordingly, printing can be performed after detecting whether there is an error in the recognized bar pattern.

In contrast, when the distance D between the sensor 130 and the printer 120 is shorter than the length of the label 330, the recognition of the bar pattern corresponding to the label is not completed before the performance of printing on the label. Accordingly, in this case, a setting may be made such that the controller 140 may allow printing when there is no error in the bar pattern recognized in the previous label on which printing has already been performed.

Meanwhile, the controller 140 may determine the label length of the printing paper by first determining the type of recognized printing paper, and may compare the identified length of the label with the previously stored distance between the sensor 130 and the printer 120, and may determine whether to perform printing on each label 330 before performing printing on the corresponding label 330 or determine whether to perform printing on the next label 330 based on the bar pattern recognized in the previous label 330.

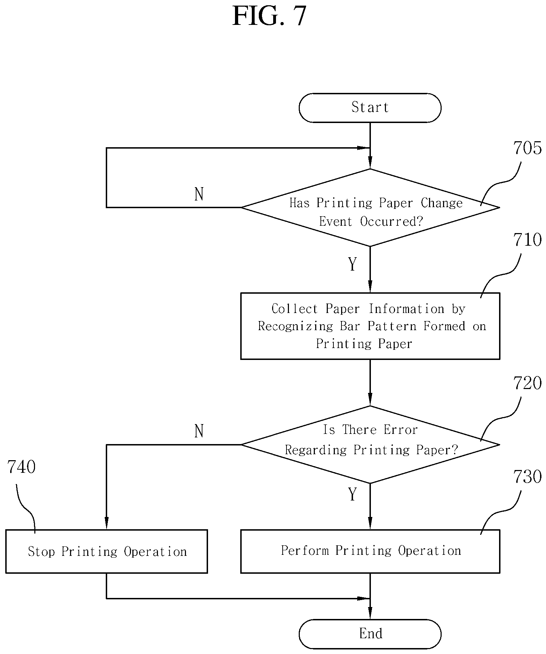

A method of performing printing according to the type of printing paper determined through bar pattern recognition as described above will be described below. FIGS. 7 to 9 are flowcharts illustrating a method of performing printing according to the type of printing paper determined through bar pattern recognition according to embodiments. The method of performing printing according to the type of printing paper determined through bar pattern recognition according to the embodiments shown in FIGS. 7 to 9 includes steps that are processed in a time-series manner in the printing apparatus 100 shown in FIGS. 1 and 2. Accordingly, the descriptions that are omitted below but have been given above in conjunction with the printing apparatus 100 shown in FIGS. 1 and 2 may also be applied to the method of performing printing according to the type of printing paper determined through bar pattern recognition according to the embodiments shown in FIGS. 7 to 9.

Referring to FIG. 7, the method of performing printing according to the type of printing paper determined through bar pattern recognition according to an embodiment may be performed to basically include step 710 of collecting paper information, step 720 of detecting an error, and step 730 of performing a printing operation.

Step 710 of collecting paper information is the step of collecting paper information about printing paper by recognizing the bar pattern of the printing paper. In this case, the controller 140 may feed the printing paper while performing a printing operation on the printing paper through the printer 120, and may store the paper information, collected by recognizing the bar pattern of the printing paper through the bar pattern sensor 132, in the storage 150.

In this case, the controller 140 of the printing apparatus 100 may collect paper information such as the type of printing paper, the manufacturing date or expiration date of the printing paper, and the authentication information of the printing paper by converting recognized bar patterns into character strings.

Furthermore, the controller 140 may sequentially collect and store successive pieces of paper information by sequentially recognizing a plurality of bar patterns successively arranged among the bar patterns formed on the printing paper.

Meanwhile, in step 710 of collecting paper information, the controller 140 may collect paper information by recognizing the bar patterns of the printing paper after performing step 705 of determining whether a printing paper change event has occurred.

In step 705, the controller 150 may determine that a printing paper change event has occurred when the printing apparatus 100 is turned on or the cover of the printing apparatus is opened or closed. When it is determined that a printing paper change event has occurred, paper information may be collected by recognizing the paper information through the bar patterns of the printing paper and converting the recognized bar patterns into character strings.

Step 720 of detecting an error is the step of detecting an error based on the paper information collected in step 710.

In this case, the controller 140 may detect the case where the paper information stored in the storage 150 is not a valid value, the case where the type of printing paper included in the paper information does not correspond to the type of printing paper preset in the printing apparatus 100, the case where the usable period of the printing paper has expired based on the manufacturing date or expiration date information included in the paper information, or the case where the type of printing paper included in the paper information and the width of the printing paper detected by the paper width detection sensor 135 do not correspond to each other as the error. That is, the controller 140 may determine whether it is true (when there is no error) or false (when there is an error) depending on whether an error is detected. The controller 140 may determine whether it is true (when there is no error) or false (when there is an error) depending on whether an error is detected.

In this case, when the paper information of the successive bar patterns is collected in step 710, the controller 140 may detect an error based on all the successive paper information. That is, the controller 140 may determine that it is false (when there is an error) when all the successive paper information has an error.

Thereafter, the controller 140 may perform a printing operation through the printer 120 in step 730 when an error is not detected in step 720, and may stop the printing operation in step 740 when an error is detected.

In this case, when an error is detected in step 720, the controller 140 may transmit and report the detected error to the host apparatus 10, and may indicate that an error has been detected by printing the word "Invalid" on the printing paper.

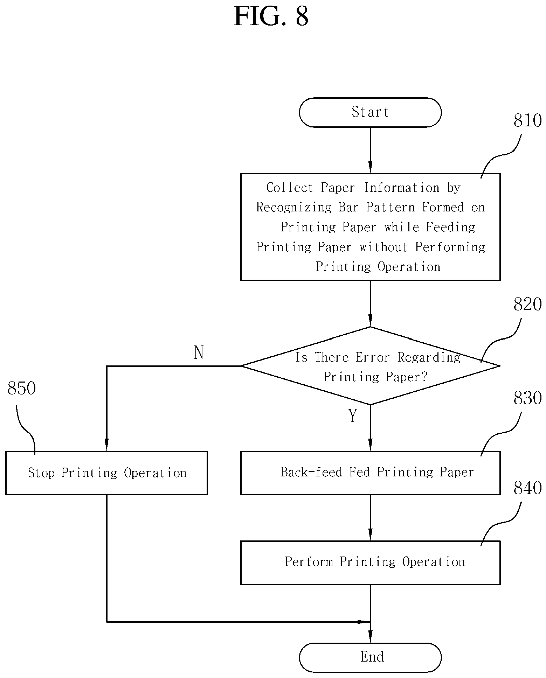

FIG. 8 is a flowchart showing a method of performing printing according to the type of printing paper determined through bar pattern recognition according to another embodiment.

Referring to FIG. 8, a method of performing printing according to the type of printing paper determined through bar pattern recognition according to another embodiment may include collecting paper information by recognizing a bar pattern while feeding printing paper without performing a printing operation in step 810 of collecting paper information.

That is, the controller 140 may store the paper information, collected by recognizing bar patterns through the bar pattern sensor 132 while only performing the operation of feeding printing paper, in the storage 150, and may sequentially recognize and collect a plurality of bar patterns successively arranged among the bar patterns formed on the printing paper.

Furthermore, the controller 140 may collect paper information after performing step 705 of determining whether the above-described printing paper change event has occurred. That is, when the printing apparatus 100 is turned on or the cover of the printing apparatus is opened or closed, the controller 140 may collect the paper information of the printing paper while feeding it without performing a printing operation.

Thereafter, the controller 140 may perform step 820 of detecting an error. In this case, step 820 is the same as step 720 described above, so that a detailed description thereof is omitted.

Thereafter, the controller 140 may stop a printing operation in step 850 when an error is detected in step 820, and may perform a printing operation through the printer 120 in step 840 when an error is not detected.

In this case, when an error is not detected, the controller 140 may back-feed the fed printing paper in step 830, and may then perform a printing operation in step 840. That is, when there is no error in the printed paper fed in step 810 collecting paper information, the controller 140 may perform a printing operation after back-feeding the printing paper, already fed in step 810, in step 830. Accordingly, a printing operation is performed by reverse-feeding the already fed label 330, so that the effect of saving printing paper can be expected.

It is obvious that when an error is not detected, the controller 140 may omit step 830 of back-feeding the fed printing paper and perform a printing operation at the feeding position of the printing paper in step 840.

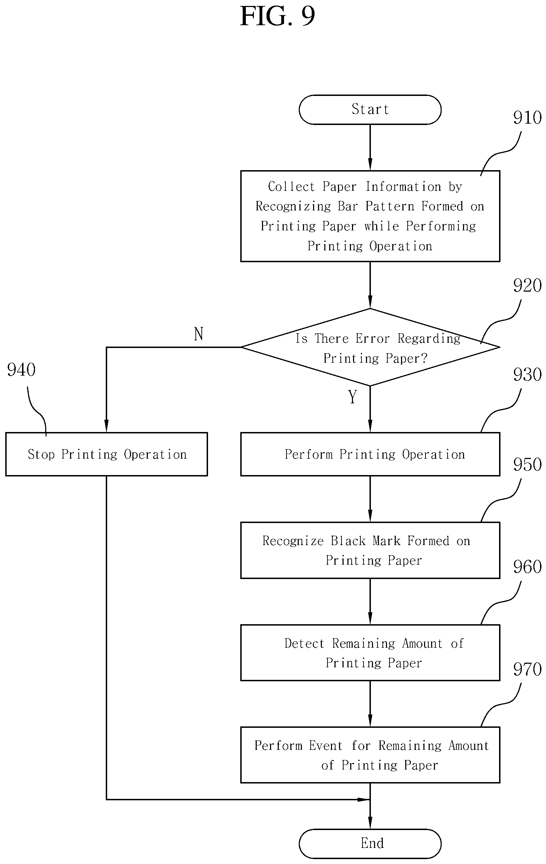

FIG. 9 is a flowchart showing a method of performing printing according to the type of printing paper determined through bar pattern recognition according to another embodiment.

Referring to FIG. 9, a method of performing printing according to the type of printing paper determined through bar pattern recognition according to another embodiment includes collecting paper information by recognizing bar patterns while simultaneously performing a feeding operation and a printing operation in the step 910 of collecting paper information.

That is, the controller 140 may feed printing paper while performing a printing operation through the printer 120, and may store the paper information, collected by recognizing the bar patterns through the bar pattern sensor 132, in the storage 150. In this case, the controller 140 may sequentially recognize and collect a plurality of bar patterns successively arranged among the bar patterns formed on the printing paper, and may collect paper information after performing step 705 of determining whether the above-described printing paper change event has occurred.

Thereafter, the controller 140 may perform step 920 of detecting an error. In this case, step 920 is the same as step 720 described above, so that a detailed description thereof is omitted.

Thereafter, the controller 140 may stop a printing operation in step 940 when an error is detected in step 920, and may perform a printing operation through the printer 120 in step 930 when an error is not detected.

Meanwhile, when step 930 of performing a printing operation is performed, step 950 of recognizing black marks formed on the printing paper, step 960 of detecting the remaining amount of printing paper, and step 970 of performing a preset event for the remaining amount of printing paper may be performed.

More specifically, in step 950, the controller 140 may recognize the lengths of the black marks while recognizing the black marks 310 or 410 formed between the labels 330 or 430 of the printing paper through the black mark sensor 131.

Furthermore, in step 960, the controller 140 may recognize the remaining amount or near-end of printing paper when the length of the recognized black mark is recognized as relatively longer than the length of other marks, or may recognize the remaining amount or near-end of printing paper through paper information corresponding to the bar patterns. Furthermore, the controller 140 may recognize the remaining amount or near-end of the printing paper by recognizing the remaining amount mark 450 formed on the printing paper through a separate sensor.

Thereafter, in step 970, the controller 140 may perform a preset event for the recognized remaining amount of printing paper. In this case, the controller 140 may stop a printing operation depending on the remaining amount of printing paper or provide notification that the remaining amount of printing paper is insufficient as a visual signal such as LED flickering or display or an audible signal such as a beep sound, and may transmit the information to the host apparatus 10.

As described above, the printing apparatus 100 according to an embodiment allows the controller 140 to determine the type of printing paper according to the result of recognizing the bar pattern formed on the printing paper through the sensor 130, so that the effect of improving convenience can be expected.

Meanwhile, although the bar pattern has been described as being printed in the form of barcode, it may be printed in the form of QR code depending on the embodiment. In this case, the bar pattern sensor may be composed of an image sensor. The QR code may be formed only on a label disposed at the front end of the plurality of labels 330 or on some of the plurality of labels 330.

The above-described embodiments are intended for illustrative purposes. It will be understood that those having ordinary knowledge in the art to which the present invention pertains can easily make modifications and variations without changing the technical spirit and essential features of the present invention. Therefore, the above-described embodiments are illustrative and are not limitative in all aspects. For example, each component described as being in a single form may be practiced in a distributed form. In the same manner, components described as being in a distributed form may be practiced in an integrated form.

The scope of protection pursued through the present specification should be defined by the attached claims, rather than the detailed description. All modifications and variations which can be derived from the meanings, scopes and equivalents of the claims should be construed as falling within the scope of the present invention.

## Claims

1. A printing apparatus for performing printing on printing paper in which a plurality of labels constituting a printing area are sequentially arranged and mounted to be retractable in a wound state and a bar pattern corresponding to paper information is formed on at least one of the plurality of labels, the printing apparatus comprising:
an input/output interface configured to receive user input and transmit and receive data to and from an external device;
a printer configured to perform printing on the printing paper;
a sensor configured to recognize black marks and bar patterns formed on the printing paper;
storage configured to store paper information corresponding to a bar pattern recognized by the sensor and store a program for performing a printing operation based on the paper information; and
a controller including at least one processor;
wherein the controller, by executing the program, collects the paper information by recognizing the bar pattern while feeding the printing paper, detects an error based on the collected paper information, and does not perform a printing operation when an error is detected and performs a printing operation when an error is not detected.

2. The printing apparatus of claim 1, wherein the sensor comprises a black mark sensor and a bar pattern sensor that are arranged alongside each other based on a widthwise direction perpendicular to a direction in which the printing paper is transferred and that include respective optical sensors that recognize the black marks and the bar patterns, respectively.

3. The printing apparatus of claim 2, wherein the black mark sensor and the bar pattern sensor are arranged in bilateral symmetry so that light emission parts of the black mark sensor and the bar pattern sensor are adjacent to each other and light reception parts thereof are arranged far away from each other.

4. The printing apparatus of claim 1, wherein the sensor is disposed in front of the printer so that the printing paper reaches the printer after having been transferred to the sensor based on a direction in which the printing paper is transferred, and is configured to come into contact with a rear surface of the printing paper.

5. The printing apparatus of claim 1, wherein the controller detects whether a printing paper change event has occurred, recognizes the bar patterns while feeding the printing paper when the printing paper change event has occurred, collects paper information by converting the recognized bar pattern into a character string, and determines that the printing paper change event has occurred when the printing apparatus is turned on or a cover of the printing apparatus is opened or closed.

6. The printing apparatus of claim 1, wherein the controller detects the error when the paper information is not a valid value, when a type of printing paper included in the paper information does not correspond to a type of printing paper preset in the printing apparatus, when a usable period of the printing paper has expired based on manufacturing date or expiration date information included in the paper information, or when the type of printing paper included in the paper information and a width of the printing paper detected do not correspond to each other.

7. The printing apparatus of claim 1, wherein, when the error is detected, the input/output interface outputs an occurrence of the error as a visual or auditory alarm or reports it to a host apparatus connected to the printing apparatus.

8. The printing apparatus of claim 1, wherein the controller sequentially collects successive paper information corresponding to a plurality of bar patterns sequentially arranged among the bar patterns formed on the printing paper, and detects the error based on the successive paper information.

9. The printing apparatus of claim 1, wherein the controller feeds the printing paper, recognizes the bar pattern without performing a printing operation, and, when an error is not detected in the paper information corresponding to the recognized bar pattern, back-feeds the already fed printing paper and then initiates a printing operation.

10. The printing apparatus of claim 1, wherein the controller feeds the printing paper, recognizes the bar pattern while performing a printing operation, and, when an error is detected in the paper information corresponding to the recognized bar pattern, stops the printing operation.

11. The printing apparatus of claim 1, wherein:
the sensor further comprises a paper width detection sensor configured to detect a width of the printing paper; and
the controller detects the error when a type of printing paper included in the paper information and the width of the printing paper detected by the paper width detection sensor do not correspond to each other.

12. The printing apparatus of claim 1, wherein the controller detects a remaining amount of printing paper based on at least one of a length of the black mark detected by the black mark sensor and the paper information corresponding to the bar pattern, and performs a preset event when the detected remaining amount is equal to or smaller than a preset remaining amount.

13. The printing apparatus of claim 4, wherein the controller:
when a length of the label determined based on the paper information is equal to or shorter than a previously stored distance between a print head included in the printer and the sensor, determines whether to perform a printing operation based on paper information obtained by recognizing a bar pattern corresponding to a label to be printed; and
when the length of the label determined based on the paper information exceeds the previously stored distance between the print head included in the printer and the sensor, determines whether to perform a printing operation based on paper information obtained by recognizing a bar pattern corresponding to a label immediately preceding a label to be printed.
